# EUROPEAN PATENT SPECIFICATION

(11) **EP 1 551 243 B1**
(45) Date of publication and mention of the grant of the patent: **09.07.2008**
(21) Application number: 03753547.3
(22) Date of filing: 13.10.2003
(51) Int. Cl.: A43B 7/12

(54) **WATERPROOFED AND BREATHABLE SOLE FOR SHOES AND MANUFACTURING METHOD THEREOF**
ATMUNGSAKTIVE UND WASSERDICHTE SCHUHSOHLE UND VERFAHREN ZU DEREN HERSTELLUNG
SEMELLE IMPER-RESPIRANTE POUR CHAUSSURES ET PROCEDE DE FABRICATION CORRESPONDANT

(30) Priority: 15.10.2002 IT PD20020264
(43) Date of publication of application: 13.07.2005
(73) Proprietor: Geox S.p.A., 31044 Montebelluna Località Biadene (Treviso) (IT)
(72) Inventor: POLEGATO MORETTI, Mario, I-31035 Crocetta del Montello (IT); FERRARESE, Antonio, I-37063 Isola Della Scala (IT)
(74) Representative: Modiano, Micaela Nadia
(86) International application number: PCT/EP2003/011307
(87) International publication number: WO 2004/034830

(56) References cited:
- EP-A- 1 031 656
- WO-A-02/052970
- US-A- 5 598 644
- US-A1- 2001 010 127
- US-A1- 2001 023 023

## Description

The present invention relates to an improved waterproofed and breathable sole for shoes and to the method for manufacturing it.

It is known that the main problem observed in using shoes with an ordinary sole made of natural material such as leather or equivalents is constituted by wet walking areas.

When rain and bad weather make streets wet and slippery, it is in fact not advisable to use shoes with leather soles, since leather, just because it is breathable and healthy for the foot, is not waterproof but in fact absorbs water.

The thinner the leather, the higher the rate at which it becomes impregnated with water or moisture, ultimately wetting the user's foot.

Accordingly, the use of soles with a leather tread is constrained by weather conditions, and for this reason shoes made of this type of material are mainly provided by manufacturers in the summer collections in countries where the dry season is more substantial.

A sole (disclosed in US 5,598,644 and EP 0 619 959 and US2001/0010127) has been devised which comprises a tread made of leather or similar material that is at least partially covered in an upward region by a membrane made of a material that is vapor-permeable and waterproof.

The waterproof and breathable membrane is fixed to the sole by means of adhesive arranged in spots, and a perimetric sealing ring made of polymeric material, for example polyurethane, is injected in a mold to assemble all the parts.

Although this sole is a considerable technical step forward, in that it renders the leather tread waterproof, it has in any case shown some limitations.

A first limitation arises from the very nature of leather, which as mentioned is a breathable material, but its breathability is not so high as to dissipate in a short time all the heat and vapor that form inside the shoe during use.

A second limitation is due to the fact that as mentioned the seal is produced by injection-molding a ring of plastic material.

This process requires the provision of thick seals and accordingly increases the rigidity of the sole, so that some types of shoe in which high flexibility is required, such as women's shoes, are difficult to manufacture.

The high cost of this technology (provision of an aluminum mold for each shoe model and size to be produced) is not inconsequential.

An attempt has been made to obviate the problem of thicknesses by using, for the perimetric seal, films made of thermoplastic polyurethane material with a thickness of 200 microns.

Although this method allows to obtain qualitatively acceptable products, it is extremely expensive, since it is almost entirely manual.

### Disclosure of the Invention

The aim of the present invention is to provide a sole, and the method for manufacturing it, that solve the drawbacks noted above in known types of waterproofed breathable shoes with a tread made of leather or equivalent material.

A consequent primary object is to provide a sole that can be thin and flexible.

Another object is to increase breathability.

Another important object is to provide a sole that is characterized by the possibility of high flexibility in production.

Another object is to increase user comfort.

Another object is to provide a sole that can be manufactured at low cost and therefore can be sold at a competitive price.

Another object is to provide a sole that can be manufactured with known equipment and methods.

In accordance with the invention, there is provided a waterproofed breathable sole for shoes, and a method for manufacturing thereof, as defined in the appended claims.

### Brief description of the drawings

Further characteristics and advantages of the invention will become better apparent from the detailed description of some embodiments thereof, illustrated by way of non-limitative example in the accompanying drawings, wherein:
Figure 1 is a schematic sectional view of the sole according to the invention;
Figure 2 is a schematic sectional view illustrating a step of the process for manufacturing the sole of Figure 1;
Figure 3 is a schematic sectional view illustrating a step of the manufacturing process that follows the step of Figure 2.

### Ways of carrying out the Invention

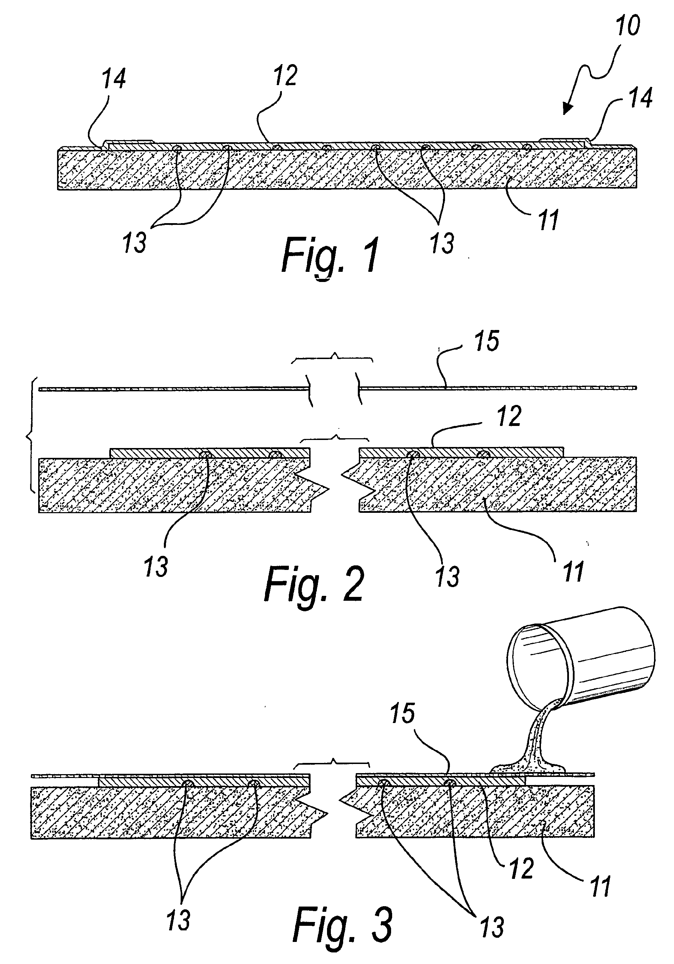

With reference to Figure 1 cited above, an improved waterproofed and breathable sole for shoes is generally designated by the reference numeral 10 and comprises a tread 11 made of leather or similar breathable and water-permeable material (such as leather, open-cell synthetic material, et cetera), covered in an upward region by a membrane 12 that is impermeable to water and vapor-permeable (breathable) and is preferably made of expanded polytetrafluoroethylene (PTFE).

The membrane 12, which in this case has no support of any kind, is provided in thicknesses that can vary between 5 and 40 microns.
The membrane 12 is conveniently spaced perimetrically from the edge of the tread 11.

The membrane 12 is preferably fixed to the tread 11 by means of adhesive 13 in spots and a perimetric sealing ring 14 is provided by screen printing.

The process for manufacturing the ring 14 provides for a first step for preparing a frame 15, which is constituted by a fabric with a sufficiently wide mesh (12 to 43 threads per centimeter), such as to allow the passage of a solution or dispersion of polymer, in a preferred embodiment polyurethane, which has a dry residue of approximately or substantially at least 60%.

This solution or dispersion is per se known and commercially available.

This material, in order to allow greater resistance to temperatures of at least 50-60 °C and ensure its chemical and structural integrity (in particular its resistance to hydrolysis and aging stability), receives the addition of suitable cross-linking agents, i.e., agents that facilitate the cross-linking reaction and are therefore capable of reacting with the functional groups that are still free inside the polyurethane.

These agents can be, for example, isocyanates (3-5%) suitably catalyzed to increase their reactivity, for example by means of amines.

During this preparatory step, it is also possible to cover some regions of the frame by way of a photoengraving process, in the regions that must not be covered by the solution, for example the ones subsequently affected or covered by the membrane 12, naturally with the exception of the regions that correspond to its perimetric regions or edges.

The membrane 12, already treated with spots 13 of glue, is then bonded to the tread 11 by hot pressing by means of a hot press (not shown in the figures).

The next steps (Figure 2) are to arrange the tread 11 under the frame 15 and pour (Figure 3) said solution or dispersion of polymer onto said frame 15.

Penetration of the material through the mesh of the frame 15 is facilitated by using a doctor.

The material, which is in the fluid state, due to the evaporation of the solvent phase, leaves the solid phase contained therein deposited on the tread 11 and on the membrane 12, forming the sealing ring 14.

The assembly constituted by the tread 11, the membrane 12 and the sealing ring 14, which corresponds to Figure 1, is removed and dried.

After forming the ring 14, it is possible to perform a further heating step, substantially at 60-80 °C, in order to accelerate cross-linking.

This heating step can be alternative to, or combined with, said step for addition of isocyanate (an agent that facilitates cross-linking).

With this technology it is possible to obtain films of a chosen constant and reproducible thickness (on the order of 100-500 microns).

The amount of fluid deposited is changed by varying the number of threads per centimeter of the frame 15.

It is possible to provide in alternative embodiments of the invention the prior application to the tread 11 of adhesion promoters, again constituted by dispersions or solutions of polyurethane polymers, which however have a low viscosity (less than 600 centipoises, according to the Brooksfield method), i.e., are capable of penetrating through the fibers of the leather itself.

In still other alternative embodiments, it is possible to use polyurethanes in a solution or dispersion having a low relative molecular mass.

In this case it is also convenient to provide an addition of a cross-linking agent such as catalyzed isocyanate, in order to block the reversibility of the process due to the temperature.

Another embodiment can comprise the application of multiple layers of polymer dispersion in order to ensure the continuity of the film that forms the ring 14.

In practice it has been found that the intended aim and objects of the present invention have been achieved.

The sole has the qualitative characteristics of leather soles, particularly breathability, together with the qualitative characteristics of soles made of rubber or synthetic material, particularly waterproofness, and all this is achieved with reduced thicknesses by virtue of the provision of the perimetric seal by screen printing.

Although the principle of screen printing is per se known, it is generally exclusively used to provide decorative details on items of clothing and shoes.

Practical tests have demonstrated that the method, suitably adapted as described above, can be used conveniently as a means for providing a perimetric seal of very low thickness between the membrane 12 and the tread 11.

The sole 10 can therefore be provided in a thin and flexible form and can be used for any shoe design, and also for women's shoes.

It should be noted that said sole can be manufactured without particular difficulties with a manufacturing process that is functionally more flexible than the current one.

The invention thus conceived is susceptible of numerous modifications and variations, all of which are within the scope of the appended claims.

All the details may further be replaced with other technically equivalent elements.

In practice, the materials used, so long as they are compatible with the contingent use, as well as the dimensions, may be any according to requirements.

The disclosures in Italian Patent Application No. PD2002A000264 from which this application claims priority are incorporated herein by reference.

## Claims

1. A waterproofed breathable sole (10) for shoes, comprising a tread (11) made of leather or similar breathable and water-permeable material, which is covered at least partially in an upward region by a membrane (12) made of a material that is breathable and waterproof where said membrane (12) is joined perimetrically to the tread (11) **characterized in that** said membrane (12) is joined to the tread by way of a screen-printed sealing ring (14) made of a solution or dispersion of polymer that has a dry residue of at least 60% by weight with the addition of setting agents.

2. The sole according to claim 1, **characterized in that** said waterproof and vapor-permeable membrane (12) is made of expanded polytetrafluoroethylene.

3. The sole according to claim 1, **characterized in that** said waterproof and vapor-permeable membrane (12) supportless, and is provided with thicknesses between 5 and 40 microns.

4. The sole according to claim 1, **characterized in that** said membrane (12) is spaced perimetrically from the edge of said tread (11).

5. The sole according to claim 1, **characterized in that** said membrane (12) is fixed to said tread (11) by way of adhesive (13) applied in spots.

6. A method for manufacturing a sole according to one or more of the preceding claims, consisting in:
-- preparing a frame (15) that comprises, at least at perimetric regions of the membrane (12) in selected position on the tread (11), a fabric with a mesh that is sufficiently wide to allow the passage of a solution or dispersion of polymer that has a dry residue of at least 60% by weight with the addition of setting agents;
-- arranging said membrane (12) on said tread (11);
-- placing said tread (11) and said membrane (12) under said frame (15), pouring said solution or dispersion of polymer onto said frame (15), and making it penetrate through the mesh of said frame (15), forming at least one layer of a sealing ring (14);
-- removing the assembly constituted by the tread (11), the membrane (12) and the ring (14); and
-- drying the assembly.

7. The method according to claim 6, **characterized in that** said solution or dispersion of polymer that has a dry residue of approximately 60% by weight is a polyurethane solution or dispersion.

8. The method according to claims 6 and 7, **characterized it** comprises addition to said solution or dispersion of polyurethane polymer that has a dry residue of approximately 60% by weight of cross-linking agents.

9. The method according to claim 8, **characterized in that** said cross-linking agents are catalyzed isocyanates.

10. The method according to one or more of claims 6 to 9, **characterized in that** it comprises a heating step, after the forming of said ring (14), in order to accelerate the cross-linking of said solution or dispersion of polymer.

11. The method according to claim 10, **characterized in that** said heating is performed substantially at 60-80 °C.

12. The method according to claim 6, comprising a preliminary application, to said tread (11), of adhesion promoters constituted by dispersions or solutions of polyurethane polymers having a low viscosity, such as to be capable of penetrating through the fibers of said leather.

13. The method according to claim 6, consisting of the preliminary application, to said tread (11), of polyurethanes having a low relative molecular mass in a solution or dispersion.

14. The method according to claim 13, **characterized it** comprises addition to said polyurethanes having a low relative molecular mass in solution or dispersion of cross-linking agents.

15. The method according to claim 14, **characterized in that** said cross-linking agents are catalyzed isocyanates.

16. The method according to claim 6, comprising, prior to the arrangement of said membrane (12) on said frame (15), covering by a photoengraving technique the regions of said frame (15) that are to be left uncovered by said solution or dispersion of polymer.

17. The method according to claim 16, **characterized in that** said regions covered by photoengraving are the regions subsequently covered by said membrane (12), except for the regions that correspond to its edges.

18. The method according to claim 6, **characterized in that** the step of arrangement of said membrane (12) on said tread (11) also comprises the gluing of said membrane (12), treated beforehand with spots (13) of glue, to said tread (11).

19. The method according to claim 18, **characterized in that** said gluing is performed by way of hot pressing.

20. The method according to claim 6, **characterized in that** it comprises facilitation of the penetration of said solution or dispersion of polymer through the mesh of said frame (15) through action of a doctor.

## Patentansprüche

1. Eine Wasserdichte atmungsaktive Schuhsohle (10), die eine Laufsohle (11) aus Leder oder einem ähnlichen atmungsaktiven und wasserdurchlässigen Material umfasst, welche zumindest teilweise in einem oberen Bereich von einer Membran (12) aus einem Material bedeckt ist, das atmungsaktiv und wasserdicht ist, wobei die Membran (12) perimetrisch mit der Laufsohle (11) verbunden ist, **dadurch gekennzeichnet, dass** die Membran (12) mit der Laufsohle durch einen im Siebdruck-Verfahren hergestellten Dichtring (14) verbunden ist, der aus einer Lösung oder Dispersion von Polymer mit einem festen Rückstand von mindestens 60 Gewichtsprozent unter Hinzufügen von Abbindereglern hergestellt ist.

2. Die Sohle gemäß Anspruch 1, **dadurch gekennzeichnet, dass** die wasserdichte und wasserdampfdurchlässige Membran (12) aus geschäumtem Polytetrafluorethylen hergestellt ist.

3. Die Sohle gemäß Anspruch 1, **dadurch gekennzeichnet, dass** die wasserdichte und wasserdampfdurchlässige Membran (12) ohne Träger ist und Dicken zwischen 5 und 40 Mikron hat.

4. Die Sohle gemäß Anspruch 1, **dadurch gekennzeichnet, dass** die Membran (12) perimetrisch von der Kante der Laufsohle (11) beabstandet ist.

5. Die Sohle gemäß Anspruch 1, **dadurch gekennzeichnet, dass** die Membran (12) an der Laufsohle (11) durch Klebstoff (13) befestigt ist, der punktförmig aufgetragen wird.

6. Ein Verfahren zur Herstellung einer Sohle gemäß einem oder mehreren der obigen Ansprüche, das aus folgenden Schritten besteht:
- Herstellung eines Rahmens (15), der, zumindest in perimetrischen Bereichen der Membran (12) in ausgewählter Position auf der Laufsohle (11), einen Stoff mit einer Maschenweite umfasst, die groß genug ist, um das Hindurchdringen einer Lösung oder Dispersion von Polymer mit einem festen Rückstand von mindestens 60 Gewichtsprozent mit Hinzufügen von Abbindereglern zu ermöglichen,
- Anordnung der Membran (12) auf der Laufsohle (11),
- Platzierung der Laufsohle (11) und der Membran (12) unter den Rahmen (15), Gießen der Lösung oder Dispersion von Polymer auf den Rahmen (15), und Hindurchdringenlassen derselben durch die Maschen des Rahmens (15), wobei mindestens eine Schicht eines Dichtrings (14) gebildet wird,
- Entfernen des Aufbaus, der aus der Laufsohle (11), der Membran (12) und dem Ring (14) besteht, und
- Trocknen des Aufbaus.

7. Das Verfahren gemäß Anspruch 6, **dadurch gekennzeichnet, dass** die Lösung oder Dispersion von Polymer, die einen festen Rückstand von ungefähr 60 Gewichtsprozent hat, eine Polyurethan-Lösung oder -Dispersion ist.

8. Das Verfahren gemäß Anspruch 6 und 7, **dadurch gekennzeichnet, dass** es das Hinzufügen von Vernetzungsmitteln zu der Lösung oder Dispersion von Polyurethan-Polymer umfasst, die einen festen Rückstand von ungefähr 60 Gewichtsprozent hat.

9. Das Verfahren gemäß Anspruch 8, **dadurch gekennzeichnet, dass** die Vernetzungsmittel katalysierte Isocyanate sind.

10. Das Verfahren gemäß einem oder mehreren der Ansprüche 6 bis 9, **dadurch gekennzeichnet, dass** es nach dem Bilden des Rings (14) einen Erhitzungsschritt umfasst, um die Quervernetzung der Lösung oder Dispersion von Polymer zu beschleunigen.

11. Das Verfahren gemäß Anspruch 10, **dadurch gekennzeichnet, dass** die Erhitzung im Wesentlichen bei 60-80°C durchgeführt wird.

12. Das Verfahren gemäß Anspruch 6, das ein vorläufiges Auftragen von Adhäsionsbeschleunigern auf die Laufsohle (11) umfasst, welche aus Dispersionen oder Lösungen von Polyurethan-Polymeren bestehen, die eine geringe Viskosität haben, so dass sie durch die Fasern des Leders dringen können.

13. Das Verfahren gemäß Anspruch 6, bestehend aus dem vorläufigen Auftragen auf die Laufsohle (11) von Polyurethanen, die eine geringe relative Molekularmasse in einer Lösung oder Dispersion haben.

14. Das Verfahren gemäß Anspruch 13, **dadurch gekennzeichnet, dass** es das Hinzufügen von Vernetzungsmitteln zu den Polyurethanen umfasst, die eine geringe relative Molekularmasse in Lösung oder Dispersion haben.

15. Das Verfahren gemäß Anspruch 14, **dadurch gekennzeichnet, dass** die Vernetzungsmittel katalysierte Isocyanate sind.

16. Das Verfahren gemäß Anspruch 6, das vor der Anordnung der Membran (12) auf dem Rahmen (15) das Bedecken der Bereiche des Rahmens (15), die von der Lösung oder Dispersion des Polymers unbedeckt bleiben sollen, durch ein Fotogravier-Verfahren umfasst.

17. Das Verfahren gemäß Anspruch 16, **dadurch gekennzeichnet, dass** die durch Fotogravieren bedeckten Bereiche diejenigen Bereiche sind, die später von der Membran (12) bedeckt werden, außer den Bereichen, die ihren Kanten entsprechen.

18. Das Verfahren gemäß Anspruch 6, **dadurch gekennzeichnet, dass** der Schritt der Anordnung der Membran (12) auf der Laufsohle (11) auch das Aufkleben der Membran (12) auf die Laufsohle (11) umfasst, die zuvor mit Punkten (13) von Klebstoff behandelt wurde.

19. Das Verfahren gemäß Anspruch 18, **dadurch gekennzeichnet, dass** das Aufkleben durch Heißpressen durchgeführt wird.

20. Das Verfahren gemäß Anspruch 6, **dadurch gekennzeichnet, dass** es das Erleichtern des Durchdringens der Lösung oder Dispersion von Polymer durch die Maschen des Rahmens (15) durch Anwendung einer Rakel umfasst.

## Revendications

1. Semelle de chaussure perméable à l'air et imperméable à l'eau (10), comprenant une semelle d'usure (11) composée de cuir ou d'un matériau similaire perméable à l'eau et perméable à l'air, qui est recouverte au moins partiellement dans une région dirigée vers le haut d'une membrane (12) composée d'un matériau perméable à l'air et imperméable à l'eau, dans lequel ladite membrane (12) est reliée de manière périmétrique à la semelle d'usure (11), **caractérisée en ce que** ladite membrane (12) est reliée à la semelle d'usure grâce à un anneau d'étanchéité imprimé au cadre (14) composé d'une solution ou d'une dispersion de polymère qui possède un résidu à sec d'au moins 60 % en poids avec l'ajout d'agents de fixation.

2. Semelle selon la revendication 1, **caractérisée en ce que** ladite membrane perméable à la vapeur et imperméable à l'eau (12) est composée de polytétrafluoroéthylène expansé.

3. Semelle selon la revendication 1, **caractérisée en ce que** ladite membrane perméable à la vapeur et imperméable à l'eau (12) est sans support et présente une épaisseur comprise entre 5 et 40 microns.

4. Semelle selon la revendication 1, **caractérisée en ce que** ladite membrane (12) est espacée de façon périmétrique du bord de ladite semelle d'usure (11).

5. Semelle selon la revendication 1, **caractérisée en ce que** ladite membrane (12) est fixée à ladite semelle d'usure (11) au moyen d'un adhésif (13) appliqué par points.

6. Procédé de fabrication d'une semelle selon l'une quelconque des revendications précédentes, comprenant les étapes consistant à :
préparer un cadre (15) qui comprend, au moins au niveau des régions périmétriques de la membrane (12) dans une position choisie sur la semelle d'usure (11), un tissu doté d'un maillage suffisamment large pour permettre le passage d'une solution ou d'une dispersion de polymère qui possède un résidu à sec d'au moins 60 % en poids avec l'ajout d'agents de fixation ;
agencer ladite membrane (12) sur ladite semelle d'usure (11) ;
placer ladite semelle d'usure (11) et ladite membrane (12) sous ledit cadre (15), verser ladite solution ou dispersion de polymère sur ledit cadre (15) et la faire pénétrer à travers le maillage dudit cadre (15), formant au moins une couche d'un anneau d'étanchéité (14) ;
retirer l'ensemble constitué de la semelle d'usure (11), de la membrane (12) et de l'anneau (14) ; et
sécher l'ensemble.

7. Procédé selon la revendication 6, **caractérisé en ce que** ladite solution ou dispersion de polymère qui possède un résidu à sec d'environ 60 % en poids est une dispersion ou une solution de polyuréthanne.

8. Procédé selon les revendications 6 et 7, **caractérisé en ce qu'**il comprend l'ajout à ladite solution ou dispersion de polymère de polyuréthane qui possède un résidu à sec d'environ 60 % en poids d'agents de réticulation.

9. Procédé selon la revendication 8, **caractérisé en ce que** lesdits agents de réticulation sont des isocyanates catalysés.

10. Procédé selon l'une quelconque des revendications 6 à 9, **caractérisé en ce qu'**il comprend une étape de chauffage, après la formation dudit anneau (14), permettant d'accélérer la réticulation de ladite solution ou dispersion de polymère.

11. Procédé selon la revendication 10, **caractérisé en ce que** ledit chauffage est effectué sensiblement entre 60 et 80°C.

12. Procédé selon la revendication 6, comprenant une application préliminaire, sur ladite semelle d'usure (11), de promoteurs d'adhésion constitués de dispersions ou de solutions de polymères de polyuréthane ayant une faible viscosité, de manière à pouvoir pénétrer dans les fibres dudit cuir.

13. Procédé selon la revendication 6, composé de l'application préliminaire, sur ladite semelle d'usure (11), de polyuréthanes ayant une masse moléculaire relativement faible dans une solution ou dispersion.

14. Procédé selon la revendication 13, **caractérisé en ce qu'**il comprend l'ajout auxdits polyuréthanes ayant une masse moléculaire relativement faible dans une solution ou dispersion d'agents de réticulation.

15. Procédé selon la revendication 14, **caractérisé en ce que** lesdits agents de réticulation sont des isocyanates catalysés.

16. Procédé selon la revendication 6, comprenant, avant l'agencement de ladite membrane (12) sur ledit cadre (15), le revêtement, par une technique de photogravure, des régions dudit cadre (15) qui ne doivent pas être recouvertes de ladite solution ou dispersion de polymère.

17. Procédé selon la revendication 16, **caractérisé en ce que** lesdites régions recouvertes par photogravure sont les régions qui sont ensuite recouvertes par ladite membrane (12), à l'exception des régions qui correspondent à ses bords.

18. Procédé selon la revendication 6, **caractérisé en ce que** l'étape d'agencement de ladite membrane (12) sur ladite semelle d'usure (11) comprend également le collage de ladite membrane (12), traitée au préalable avec des points (13) de colle, sur ladite semelle d'usure (11).

19. Procédé selon la revendication 18, **caractérisé en ce que** ledit collage est exécuté au moyen d'un pressage à chaud.

20. Procédé selon la revendication 6, **caractérisé en ce qu'**il comprend l'action consistant à faciliter la pénétration de ladite solution ou dispersion de polymère dans le maillage dudit cadre (15) grâce à l'action d'une raclette
